# EUROPÄISCHE PATENTSCHRIFT

(11) **EP 2 734 387 B1**
(45) Veröffentlichungstag und Bekanntmachung des Hinweises auf die Patenterteilung: **16.08.2017**
(21) Anmeldenummer: 12728229.1
(22) Anmeldetag: 14.06.2012
(51) Int. Cl.: B60C 13/00, B60C 13/02

(54) **FAHRZEUGLUFTREIFEN**
PNEUMATIC VEHICLE TYRE
PNEUMATIQUES POUR VÉHICULES

(30) Priorität: 19.07.2011 DE 102011051933
(43) Veröffentlichungstag der Anmeldung: 28.05.2014
(73) Patentinhaber: Continental Reifen Deutschland GmbH, 30165 Hannover (DE)
(72) Erfinder: RITTWEGER, Stefan, 30163 Hannover (DE)
(74) Vertreter: Finger, Karsten
(86) Internationale Anmeldenummer: PCT/EP2012/061246
(87) Internationale Veröffentlichungsnummer: WO 2013/010726

(56) Entgegenhaltungen:
- EP-A1- 1 323 550
- DE-A1-102004 010 060
- DE-A1-102008 037 483
- US-A1- 2009 218 019

## Beschreibung

Die Erfindung betrifft einen Fahrzeugluftreifen mit einem profilierten Laufstreifen und mit zwei Reifenseitenwänden, welche auf ihrer nach axial außen gerichteten Oberfläche Oberflächenstrukturen aufweisen.

Derartige Fahrzeugluftreifen sind bekannt. Die Oberflächenstrukturen der Reifenseitenwände dienen üblicherweise der Kennzeichnung der Reifen oder der optischen Gestaltung. Daneben sind aus der EP1029715B1 linienförmige Oberflächenstrukturen der Reifenseitenwände bekannt, die Einschnüreffekte des Reifens überlagern. Darüber hinaus ist es auch bekannt, Oberflächenstrukturen in Form von flächenförmigen Vertiefungen in der Oberfläche der Reifenseitenwand auszubilden. So ist beispielsweise aus der WO2010/013453A1 bekannt, im Bereich des Felgenhorns die Reifenseitenwand mit kalottenförmigen Vertiefungen auszubilden.

Gerade bei hohen Fahrgeschwindigkeiten des Fahrzeuges, bei denen die Fahrzeuggeschwindigkeit und die Relativgeschwindigkeit der Reifenbewegung gegenüber dem Fahrzeug zu hohen Umströmungsgeschwindigkeiten der Reifenseitenwand führt, bewirken frühe Abrisse der laminaren Luftströmung in der Grenzschicht einen erhöhten Luftwiderstand, welche sich auch auf den Treibstoffverbrauch sowie auf die Geräuschbildung des Fahrzeugs auswirken. Die strukturierten Oberflächen der bekannten Reifenseitenwände beeinflussen die Grenzschicht durch mehr oder weniger kontrollierte Turbulenzen und Abrisse der Laminarströmungen in der Grenzschicht, wodurch der Luftwiderstand z.T. sogar noch weiter erhöht werden kann.

Bekannte als Erhebung ausgebildete Beschriftungen unterliegen der Gefahr des Abriebs bei wiederholten Berührkontakten mit Bordsteinen. Auch die flächenförmigen Vertiefungen unterliegen der Gefahr des Abriebes der Kantenbereiche der Vertiefung während des Berührkontaktes mit Bordsteinen, so dass eine konturlose, kantenlose Delle im Material verbleibt.

Zur Einformung von Fahrzeugluftreifen werden zur Entlüftung häufig in den Vulkanisationsform Entlüftungsventile eingesetzt, durch die die zwischen Kautschukmaterial und Reifenform eingeschlossene Luft entweichen kann und die ein Austreten von Kautschukmaterial aus der Form dennoch weitgehend vermeiden. Dennoch kann in der Position der Entlüftungsventile Austrieb auftreten, der nach Vulkanisation ohne weitere Maßnahmen auf der Reifenseitenwand verbleiben würde.

Aus der DE 10 2008 037 484 A1 ist ein Fahrzeugluftreifen gemäß den Merkmalen des Oberbegriffs des Anspruchs 1 bekannt, wobei die dort ausgebildeten ringförmigen linienförmigen Strukturen konzentrisch ineinander oder sich schneidende ringförmige Strukturen zur Erzielung eines Moire-Musters sind.

Der Erfindung liegt die Aufgabe zugrunde, einen Fahrzeugluftreifen mit strukturierten Oberflächen der Reifenseitenwände zu schaffen, welche einen reduzierten Luftwiderstand bei guter Abriebfestigkeit der Struktur und guter Einformbarkeit ermöglichen.

Die Aufgabe wird erfindungsgemäß durch die Ausbildung eines Fahrzeugluftreifens mit einem profilierten Laufstreifen und mit zwei Reifenseitenwänden, welche auf ihrer nach axial außen gerichteten Oberfläche Oberflächenstrukturen aufweisen, gemäß den Merkmalen von Anspruch 1 gelöst, bei dem die Oberfläche wenigstens einer Seitenwand mit einem Abschnitt mit einer Anhäufung von sowohl in radialer Richtung R als auch in Umfangsrichtung U nebeneinander verteilt angeordneten ringförmigen linienförmigen Strukturen ausgebildet ist, wobei die linienförmige Struktur jeweils ein Oberflächenelement unmittelbar eng zumindest teilweise umschließt und gegenüber dem von ihr umschlossenen Oberflächenelementen und gegenüber der die linienförmige Struktur umschließenden Oberfläche der Seitenwand als linienförmige Vertiefung vertieft ausgebildet sind, und bei dem die linienförmige Vertiefung jeweils eine geöffnete Ringform mit einem Öffnungsspalt bildet und das von ihr umschlossene Oberflächenelement und die die linienförmige Vertiefung umschließenden Oberfläche der Seitenwand durch den Öffnungsspalt hindurch stetig ineinander übergehen.

Die Ausbildung ermöglicht durch die Anhäufung von sowohl in radialer Richtung R als auch in Umfangsrichtung U nebeneinander verteilt angeordneten ringförmigen linienförmigen Strukturen, eine Ausbildung eines Netzes von engmaschig und dicht nebeneinander angeordneten von ringförmigen Vertiefungen. Dies engmaschige dichte Netz von ringförmigen, linienförmigen Vertiefungen, welche jeweils Oberflächenelemente unmittelbar eng umschließen und gegenüber den von ihnen umschlossenen Oberflächenelementen und gegenüber der äußeren Umgebung vertieft ausgebildet sind, bewirkt bei hohen Geschwindigkeiten das Entstehen von Turbulenzen in der Grenzschicht der die Reifenseitenwandoberfläche umströmenden Luft. Diese Miniturbulenzen versetzen die Abrisskanten der die Reifenseitenwandoberfläche umströmenden Laminarströmung nach hinten und der Luftwiderstand wird herabgesetzt. Die Ausbildung ermöglicht eine gute Ausnutzung der Oberfläche der Reifenseitenwand zur Erzielung einer möglichst langen wirksamen laminaren Grenzschicht an der unter Drehbewegung stehenden angeströmten Reifenoberfläche. Der Luftwiderstand kann auf diese Weise unter Berücksichtigung der besonderen Form der Oberfläche und der Bewegung des Fahrzeugluftreifens wirkungsvoll reduziert werden. Geräuschbildung und Treibstoffverbrauch können somit im Rahmen der Oberflächengestaltung der Seitenwand wirkungsvoll verbessert werden. Die Strukturen sind durch ihre ringförmig linienförmige Vertiefung gegen Scheuereffekte und somit gegen unerwünschten ihrer scharfen Kontur beschädigenden Abrieb beim Berührkontakt mit Bordsteinkanten geschützt. Bei der Einformung des Reifens in der Vulkanisationsform kann die von der linienförmigen Vertiefung zumindest teilweise umschlossene Oberfläche optimal für die weitgehend störungsfreie Platzierung eines Entlüftungventils in der Vulkanisationsform genutzt werden. Der Luftwiderstand kann durch den Öffnungsspalt auf diese Weise besonders wirkungsvoll reduziert werden. Geräuschbildung und Treibstoffverbrauch können somit im Rahmen der Oberflächengestaltung der Seitenwand wirkungsvoll verbessert werden. Der Öffnungsspalt ermöglicht darüber hinaus eine einfache Entlüftung bei der Einformung in der Vulkanisationsform. Die von der Ringform umschlossene Oberfläche kann darüber hinaus zur optimierten Positionierung von Entlüftungsventilen unter Reduktion des störenden Verbleib von Ventilspuren auf dem Reifen in der Vulkanisationsform genutzt und der Öffnungsspalt zur optimalen Ableitung der eingeschlossenen Luft genutzt werden.

Besonders vorteilhaft ist die Ausbildung eines Fahrzeugluftreifens gemäß den Merkmalen von Anspruch 2, wobei der Öffnungsspalt der linienförmigen Vertiefungen des Abschnitts im zylindrischen Koordinatensystem des Reifens mit Reifenachse, Umfangsrichtung U und radialer Richtung R jeweils zur gleichen Richtung hin ausgerichtet ist.

Besonders vorteilhaft ist die Ausbildung eines Fahrzeugluftreifens gemäß den Merkmalen von Anspruch 3, wobei die linienförmigen Strukturen so positioniert sind, dass ihr Öffnungsspalt jeweils in radialer Richtung R nach innen zur Reifenachse hin weist. Die Nutzung der Fließrichtung des Kautschukmaterials in radialer Richtung nach innen zur Entlüftung ermöglicht Vorteile in der Ausformung.

Besonders vorteilhaft ist die Ausbildung eines Fahrzeugluftreifens gemäß den Merkmalen von Anspruch 4, wobei der Außendurchmesser D ringförmigen, linienförmigen Vertiefungen mit 4mm ≤ D ≤ 7mm ausgebildet ist. Die Außendurchmesser sind dabei groß genug zur Platzierung eines Formentlüftungsventiles und klein genug zur Erzeugung von Mikroverwirbelungen der vorbeiströmenden Luft im Einsatz am Fahrzeug.

Besonders vorteilhaft zur Erzeugung von Mikroverwirbelungen der Luft ist die Ausbildung eines Fahrzeugluftreifens gemäß den Merkmalen von Anspruch 5, wobei die Breite d der linienförmigen Vertiefungen mit 0,5mm ≤ d ≤ 1,5mm ausgebildet ist.

Besonders vorteilhaft ist die Ausbildung eines Fahrzeugluftreifens gemäß den Merkmalen von Anspruch 6, wobei die linienförmigen Vertiefungen mit einer Tiefe t mit 0,3mm ≤ t ≤ 0,6mm ausgebildet sind. Hierdurch können in einfacher Weise die Miniturbulenzen unter Nutzung der bekannten Gravurtiefen umgesetzt werden.

Besonders vorteilhaft ist die Ausbildung eines Fahrzeugluftreifens gemäß den Merkmalen von Anspruch 7, wobei die ringförmigen, linienförmige Vertiefungen mit einer Öffnungsbreite b ihres Öffnungsspaltes mit b < (D/2) - insbesondere mit 0,3mm ≤ b ≤ 1,5mm - ausgebildet ist. Hierdurch ist eine optimale Entlüftung in der Vulkanisationsform möglich.

Besonders vorteilhaft ist die Ausbildung eines Fahrzeugluftreifens gemäß den Merkmalen von Anspruch 8, wobei mehrere derartige von linienförmigen Vertiefungen umhüllte Oberflächenelemente in einer Reihe in radialer Position im Reifen übereinander angeordnet sind, und wobei mehrere derartiger Reihen von in radialer Position im Reifen übereinander angeordneten von linienförmigen Vertiefungen umhüllten Oberflächenelementen in Umfangsrichtung U nebeneinander angeordnet sind. Dies ermöglicht eine dichte gleichmäßige Verteilung der ringförmigen Vertiefungen in der Oberfläche.

Besonders vorteilhaft ist die Ausbildung eines Fahrzeugluftreifens gemäß den Merkmalen von Anspruch 9, wobei jeweils in Umfangsrichtung U nebeneinander angeordnete Reihen in radialer Richtung R versetzt zueinander ausgebildet sind, sodass die linienförmigen Vertiefungen der einen von zwei in Umfangsrichtung U benachbarten Reihen jeweils in radialer Position zwischen zwei linienförmigen Vertiefungen der anderen der beiden benachbarten Reihen angeordnet sind. Dies ermöglicht eine besonders dichte gleichmäßige Verteilung der ringförmigen Vertiefungen in der Oberfläche.

Besonders vorteilhaft ist die Ausbildung eines Fahrzeugluftreifens gemäß den Merkmalen von Anspruch 10, wobei in Umfangsrichtung U hintereinander angeordnete Reihen, deren linienförmige Vertiefungen jeweils in gleicher radialer Position ausgebildet sind, mit einen um Winkel α mit 2° ≤ α ≤ 4° - insbesondere mit α=2,4° - miteinander einschließen, wobei der Winkel α jeweils zwischen den beiden durch die Mittelpunkte der ringförmigen Vertiefungen einer Reihe ausgebildeten Radialen des Reifens gemessen wird.

Besonders vorteilhaft ist die Ausbildung eines Fahrzeugluftreifens gemäß den Merkmalen von Anspruch 11, wobei in radialer Richtung R benachbarte ringförmige Vertiefungen des Abschnitts mit einem in radialer Richtung R des Reifens gemessenen Abstand a₂ zueinander angeordnet sind mit 2mm ≤ a₂≤ 5mm. Dies ermöglicht eine dichte gleichmäßige Verteilung der ringförmigen Vertiefungen in der Oberfläche.

Besonders vorteilhaft ist die Ausbildung eines Fahrzeugluftreifens gemäß den Merkmalen von Anspruch 12, wobei in Umfangsrichtung U benachbarte ringförmige Vertiefungen des Abschnitts mit einem in Abstand a₁ zueinander angeordnet sind mit 2mm ≤ a₁≤ 5mm. Dies ermöglicht eine dichte gleichmäßige Verteilung der ringförmigen Vertiefungen in der Oberfläche.

Die Erfindung wird im Folgenden an Hand der in den Figuren 1 bis 5 dargestellten Ausführungsbeispiele näher erläutert. Hierin zeigen
- Fig.1: eine Draufsicht auf die Reifenseitenwand eines Fahrzeugreifens mit Blickrichtung in axialer Richtung A des Fahrzeugluftreifens auf den Fahrzeugreifen,
- Fig. 2: Ausschnitt der in Fig.1 dargestellten Oberflächenstruktur der Reifenseitenwand gemäß Detail II-II von Fig.1 in vergrößerter Darstellung,
- Fig. 3: Ausschnitt der in Fig.2 dargestellten Oberflächenstruktur der Reifenseitenwand gemäß Detail III-III von Fig.1 in vergrößerter Darstellung,
- Fig. 4: Reifenseitenwand von Fig.2 in Schnittdarstellung gemäß Schnitt IV-IV von Fig.2 mit Blickrichtung in Umfangsrichtung U des Fahrzeugluftreifens,
- Fig. 5: Reifenseitenwand von Fig.2 in Schnittdarstellung gemäß Schnitt V-V von Fig.2 mit Blickrichtung in radialer Richtung R des Fahrzeugluftreifens.

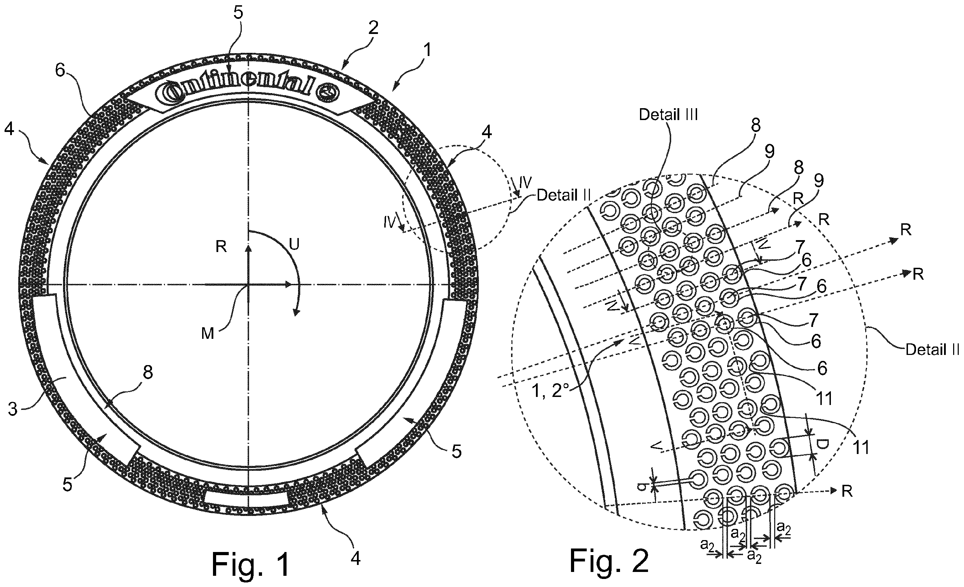

Fig.1 zeigt einen Fahrzeugluftreifen 1 in der in axialer Richtung A des Fahrzeugluftreifens gerichteten Draufsicht. Der Fahrzeugluftreifen 1 ist konzentrisch zur Reifenachse ausgebildet. Die Reifenachse A ist in der zweidimensionalen Darstellung von Fig.1 als Mittelpunkt M dargestellt. Fig. 1 zeigt darüber hinaus die radiale Richtung R des Fahrzeugluftreifens sowie die um die Reifenachse gerichtete Umfangsrichtung U.

Der Fahrzeugluftreifen 1 ist in axialer Richtung A durch die Reifenseitenwand 3 nach außen begrenzt, welche sich in radialer Richtung R ausgehend vom Wulstbereich 8 nach radial außen bis zu dem den Reifen nach radial außen begrenzenden, profilierten Laufstreifen 2 erstreckt. Die Reifenseitenwand 3 ist in Umfangsrichtung U des Fahrzeugluftreifens 1 über den gesamten Umfang des Fahrzeugluftreifens 1 erstreckt ausgebildet und im radial äußeren Erstreckungsbereich, welcher sich zwischen einer radialen Position, die wenigstens der Hälfte - z.B. der Hälfte - der in radialer Richtung gemessenen Höhe H des Fahrzeugluftreifens 1 entspricht, und dem Laufstreifen 1 erstreckt mit einer strukturierten Oberfläche versehen. In diesem radial äußeren Erstreckungsbereich sind dabei Umfangssegmente 4 und Umfangssegmente 5 mit strukturierter Oberfläche ausgebildet, welche in alternierender Reihenfolge über den Umfang verteilt sind. In der dargestellten Ausführung sind drei Umfangssegmente 4 und drei Umfangssegmente 5 ausgebildet.

Die Umfangsbereiche 5 sind in bekannter Weise in ihrer Oberfläche mit Schriftzügen zur Kennzeichnung des Reifens strukturiert ausgebildet.

Die Umfangsbereiche 4 sind Oberflächenbereiche, die mit einer Anhäufung von sowohl in radialer Richtung R übereinander als auch in Umfangsrichtung U nebeneinander verteilt angeordneten kreisringförmigen linienförmigen Vertiefungen 6 und mit von den linienförmigen Vertiefungen 6 teilweise umschlossenen Oberflächenelementen 7 ausgebildet sind. Die ringförmigen Vertiefungen 7 sind mit einem Außendurchmesser D mit 4mm ≤ D ≤ 7mm und mit an ihrer in radialer Richtung R des Reifens nach innen gerichteten und zur Reifenachse hinweisenden Seite mit einem Öffnungsspalt 11 mit einer Öffnungsbreite b mit b < (D/2) ausgebildet.

Die Öffnungsbreite b ist mit 0,3mm ≤ b ≤ 1,5mm ausgebildet.

Im dargestellten Ausführungsbeispiel ist D=5,5mm und b=1mm ausgebildet.

Die Oberflächenbereiche 4 decken mit ihrer Umfangserstreckung in ihrer Summe wenigstens 30% der gesamten Umfangserstreckung des Fahrzeugluftreifens 1 ab.
Das einzelne Umfangssegment 4 deckt dabei wenigstens 10% der gesamten Umfangserstreckung des Reifens ab.

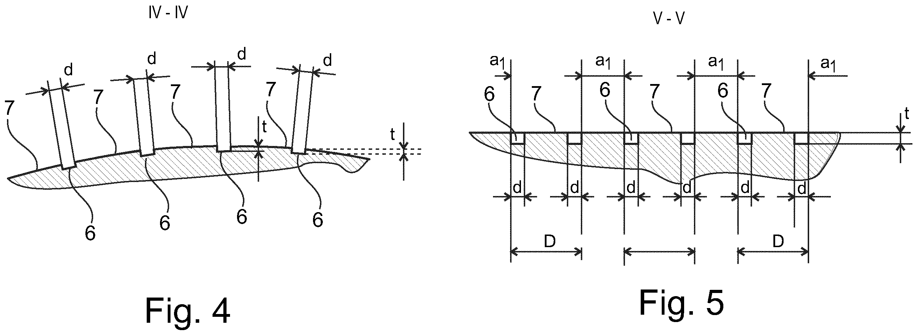

Wie in den Figuren 2 bis 5 dargestellt ist, sind die linienförmigen Vertiefungen 6 feine nutförmige Vertiefungen. Die durch die Vertiefungen 6 ringförmig umschlossene Oberfläche 7 und die die ringförmige Vertiefung 6 von außen umschließende Oberfläche sind durch den Öffnungsspalt 11 hindurch stetig verbunden und bilden eine gemeinsame Oberfläche. Die ringförmige linienförmige Vertiefung 6 erstreckt sich über ihre gesamte linienförmige Erstreckung hinweg jeweils gegenüber dieser Oberfläche - und somit sowohl gegenüber der umschlossenen Oberfläche 7als auch gegenüber der die ringförmige Vertiefung 6 von außen umschließende Oberfläche - senkrecht zur Reifenoberfläche gesehen bis in eine Tiefe t mit 0,3mm ≤ t ≤ 0,6mm in die Reifenseitenwand hinein und ist in der Seitenwandoberfläche längs ihrer linienförmigen Erstreckung mit einer senkrecht zu ihrer Haupterstreckungsrichtung ausgebildeter Nutbreite d mit 0,5mm ≤ d ≤ 1,5mm ausgebildet.

Im dargestellten Ausführungsbeispiel ist d=1mm und t=0,4mm ausgebildet.

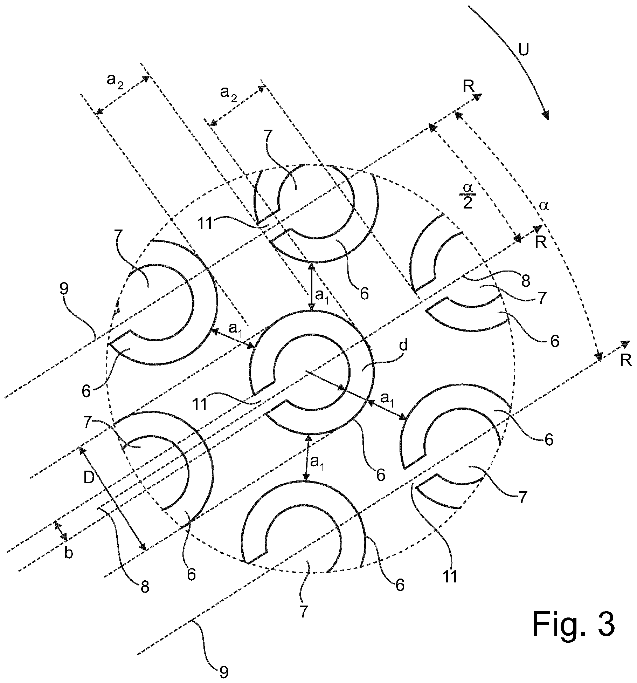

Wie in Fig.2 und 3 zu erkennen ist, sind dabei mehrere derartige von der linienförmigen Vertiefungen 6 jeweils in gleicher Umfangsposition des Reifens radial übereinander angeordnet ausgebildet. Wie in Fig. 2 zu erkennen ist, bilden diese radial übereinander positionierten von der linienförmigen Vertiefungen 6 jeweils eine in radialer Richtung R ausgerichtete Reihe 8 von linienförmigen Vertiefungen 6. Die in radialer Richtung R benachbarten ringförmigen Vertiefungen sind in radialer Richtung R des Reifens jeweils im Abstand a₂ zu einander angeordnet mit 2mm ≤ a₂≤ 5mm.

Wie in Fig. 2 und 3 dargestellt ist, sind in einem Ausführungsbeispiel mehrere derartige Reihen 8 und 9 von radial übereinander angeordneten Vertiefungen 6 in Umfangsrichtung U nebeneinander angeordnet ausgebildet und bilden so ein im Oberflächenbereich 4 der Reifenseitenwand ausgebildetes dichtes Netz von jeweils Oberflächenelemente 7 teilweise umschließenden linienförmigen ringförmigen Vertiefungen 6.

Wie in Fig. 2 ebenfalls dargestellt ist, sind in einem Ausführungsbeispiel über den Umfang des Oberflächenbereichs 4 hinweg Reihen 8 und 9 in alternierender Reihenfolge ausgebildet, wobei die Reihe 9 wie die Reihen 8 aus in radialer Richtung R übereinander angeordneten und jeweils von linienförmigen Vertiefungen 6 umschlossenen Oberflächenelementen 7 und in radialer Richtung R im Abstand a₂ von einander ausgebildet sind. Die Reihen 9 sind in analoger Weise wie die oben beschriebene Ausbildung der Reihe 8 ausgebildet. Die Reihen 8 sind wie im oben dargestellten Ausführungsbeispiel jeweils mit in gleichen radialen Positionen ausgebildeten Vertiefungen 6 ausgebildet. Die Position der Vertiefungen 6 der Reihen 9 ist in radialer Richtung gegenüber der Position der Vertiefungen 6 der Reihen 8 versetzt ausgebildet, so dass jeweils zwischen der radialen Position zweier benachbarter Vertiefungen 6 einer Reihe 9 eine radiale Position einer Vertiefung 6 einer Reihe 8 ausgebildet ist und umgekehrt.

Wie in Figur 2 und 3 zu erkennen ist, sind die Vertiefungen 6 einer Reihe 8 jeweils zu den benachbarten Vertiefungen 6 der in Umfangsrichtung U benachbarten Reihen 9, d.h. zu denjenigen Vertiefungen 6 der Reihen 9 zwischen deren radialen Positionen die Vertiefungen 6 der Reihe 8 angeordnet ist, in einem Abstand a₁ mit 2mm ≤ a₁≤ 5mm angeordnet.

Die Reihen 8 von ringförmigen Vertiefungen 6 erstrecken sich in radialer Richtung R des Fahrzeugluftreifens nach außen. In Umfangsrichtung U benachbarte Reihen 8 schließen dabei jeweils eine Winkel α miteinander ein, wobei dieser zwischen denjenigen durch den Reifenmittelpunkt gehenden Radialen bemessen wird, welche sich durch alle Mittelpunkte der ringförmigen Vertiefungen 6 jeweils einer Reihe 8 hindurch erstrecken. Analog schließen in Umfangsrichtung U benachbarte Reihe 9 jeweils einen derartigen Winkel α miteinander ein. Eine Reihe 8 schließt mit der benachbarten Reihe 9 jeweils einen Winkel (α/2) ein. Der Winkel α ist mit 2° ≤ α ≤ 4° ausgebildet. Im dargestellten Ausführungsbeispiel ist α = 2,4° gewählt.

Im dargestellten Ausführungsbeispiel ist der in radialer Richtung R des Reifens gemessene Abstand a₂ zweier benachbarter Vertiefungen 6 mit a₂ = 2,7mm ausgebildet. Der Abstand a₁ ist mit a₁ ≈ a₂ ausgebildet.

Wie in Fig.1 dargestellt ist, ist in einem Ausführungsbeispiel in der Reifenseitenwand zusätzlich in den Oberflächenbereichen 5 im radial äußeren Erstreckungsbereich der Seitenwand ein in radialer Richtung R schmaler über den Umfang erstreckter Streifen ausgebildet mit einzelnen in Umfangsrichtung U nebeneinander angeordneten ringförmigen Vertiefungen 6.

### Bezugszeichenliste

### (Teil der Beschreibung)

- 1: Fahrzeugluftreifen
- 2: Laufstreifen
- 3: Reifenseitenwand
- 4: Oberflächenbereich mit Netzstruktur
- 5: Oberflächenbereich
- 6: Linienförmige Vertiefung
- 7: Teilweise umschlossenes Oberflächenelement
- 8: Wulstbereich
- 9: Reihe
- 10: Reihe
- 11: Ringöffnungsspalt
- 12:

## Patentansprüche

1. Fahrzeugluftreifen mit einem profilierten Laufstreifen (2) und mit zwei Reifenseitenwänden (3), welche auf ihrer nach axial außen gerichteten Oberfläche Oberflächenstrukturen aufweisen, wobei die Oberfläche wenigstens einer Seitenwand (3) mit einem Abschnitt mit einer Anhäufung von sowohl in radialer Richtung R als auch in Umfangsrichtung U nebeneinander verteilt angeordneten ringförmigen linienförmigen Strukturen (6) ausgebildet ist, wobei die linienförmige Struktur (6) jeweils ein Oberflächenelement (7) unmittelbar eng zumindest teilweise umschließt und gegenüber dem von ihr umschlossenen Oberflächenelementen (7) und gegenüber der die linienförmige Struktur (6) umschließenden Oberfläche der Seitenwand (3) als linienförmige Vertiefung (6) vertieft ausgebildet sind,
**dadurch gekennzeichnet,**
**dass** die linienförmige Vertiefung (6) jeweils eine geöffnete Ringform mit einem Öffnungsspalt (11) bildet und das von ihr umschlossene Oberflächenelement (7) und die die linienförmige Vertiefung (6) umschließenden Oberfläche der Seitenwand (3) durch den Öffnungsspalt (11) hindurch stetig ineinander übergehen.

2. Fahrzeugluftreifen gemäß den Merkmalen von Anspruch 1,
wobei der Öffnungsspalt (11) der linienförmigen Vertiefungen (6) des Abschnitts im zylindrischen Koordinatensystem des Reifens mit Reifenachse, Umfangsrichtung U und radialer Richtung R jeweils zur gleichen Richtung hin ausgerichtet ist.

3. Fahrzeugluftreifen gemäß den Merkmalen von Anspruch 1 oder 2,
wobei die linienförmigen Strukturen (6) so positioniert sind, dass ihr Öffnungsspalt (11) jeweils in radialer Richtung R nach innen zur Reifenachse hin weist.

4. Fahrzeugluftreifen gemäß den Merkmalen von einem oder mehreren der vorangegangenen Ansprüche,
wobei der Außendurchmesser D ringförmigen, linienförmigen Vertiefungen (6) mit 4mm ≤ D ≤ 7mm ausgebildet ist.

5. Fahrzeugluftreifen gemäß den Merkmalen von einem oder mehreren der vorangegangenen Ansprüche,
wobei die Breite d der linienförmigen Vertiefungen (6) mit 0,5mm ≤ d ≤ 1,5mm ausgebildet ist.

6. Fahrzeugluftreifen gemäß den Merkmalen von einem oder mehreren der vorangegangenen Ansprüche,
wobei die linienförmigen Vertiefungen (6) mit einer Tiefe t mit 0,3mm ≤ t ≤ 0,6mm ausgebildet sind.

7. Fahrzeugluftreifen gemäß den Merkmalen von einem oder mehreren der vorangegangenen Ansprüche 1 bis 6,
wobei die ringförmigen, linienförmige Vertiefungen (6) mit einer Öffnungsbreite b ihres Öffnungsspaltes (11) mit b < (D/2) - insbesondere mit 0,3mm ≤ b ≤ 1,5mm - ausgebildet ist.

8. Fahrzeugluftreifen gemäß den Merkmalen von einem oder mehreren der vorangegangenen Ansprüche,
wobei mehrere derartige von linienförmigen Vertiefungen (6) umhüllte Oberflächenelemente (7) in einer Reihe (8,9) in radialer Position im Reifen übereinander angeordnet sind, und
wobei mehrere derartiger Reihen (8,9) von in radialer Position im Reifen übereinander angeordneten von linienförmigen Vertiefungen (6) umhüllten Oberflächenelementen (7) in Umfangsrichtung U nebeneinander angeordnet sind.

9. Fahrzeugluftreifen gemäß den Merkmalen von Anspruch 8,
wobei jeweils in Umfangsrichtung U nebeneinander angeordnete Reihen (8,9) in radialer Richtung R versetzt zueinander ausgebildet sind, sodass die linienförmigen Vertiefungen (6) der einen (8) von zwei in Umfangsrichtung U benachbarten Reihen (8,9) jeweils in radialer Position zwischen zwei linienförmigen Vertiefungen (6) der anderen (9) der beiden benachbarten Reihen (8,9) angeordnet sind.

10. Fahrzeugluftreifen gemäß den Merkmalen von Anspruch 8 oder 9,
wobei in Umfangsrichtung U hintereinander angeordnete Reihen (8,9), deren linienförmige Vertiefungen (6) jeweils in gleicher radialer Position ausgebildet sind, mit einen um Winkel α mit 2° ≤ α ≤ 4° - insbesondere mit α=2,4° - miteinander einschließen, wobei der Winkel α jeweils zwischen den beiden durch die Mittelpunkte der ringförmigen Vertiefungen (6) einer Reihe (8,9) ausgebildeten Radialen des Reifens gemessen wird.

11. Fahrzeugluftreifen gemäß den Merkmalen von einem oder mehreren der vorangegangenen Ansprüche,
wobei in radialer Richtung R benachbarte ringförmige Vertiefungen (6) des Abschnitts mit einem in radialer Richtung R des Reifens gemessenen Abstand a₂ zueinander angeordnet sind mit 2mm ≤ a₂≤ 5mm.

12. Fahrzeugluftreifen gemäß den Merkmalen von einem oder mehreren der vorangegangenen Ansprüche,
wobei in Umfangsrichtung U benachbarte ringförmige Vertiefungen (6) des Abschnitts mit einem in Abstand a₁ zueinander angeordnet sind mit 2mm ≤ a₁≤ 5mm.

## Claims

1. Pneumatic vehicle tyre with a profiled tread (2) and with two tyre sidewalls (3), which have surface structures on the axially outwardly directed surface thereof, wherein the surface of at least one sidewall (3) is formed with a portion having an accumulation of annular, linear structures (6) arranged distributed alongside one another both in the radial direction R and in the circumferential direction U, wherein the linear structure (6) in each case at least partially surrounds a surface element (7) in close proximity and is formed recessed as a linear recess (6) in relation to the surface elements (7) which it surrounds and in relation to that surface of the sidewall (3) which surrounds the linear structure (6),
**characterized**
**in that** the linear recess (6) in each case forms an open annular form with an opening gap (11) and the surface element (7) which it surrounds and that surface of the sidewall (3) which surrounds the linear recess (6) merge smoothly with one another through the opening gap.

2. Pneumatic vehicle tyre according to the features of Claim 1,
wherein, in the cylindrical coordinate system of the tyre, the opening gap (11) of the linear recesses (6) of the portion is aligned in the same direction respectively with the tyre axis, the circumferential direction U and the radial direction R.

3. Pneumatic vehicle tyre according to the features of Claim 1 or 2,
wherein the linear structures (6) are positioned such that their opening gap (11) in each case points inwardly in the radial direction R towards the tyre axis.

4. Pneumatic vehicle tyre according to the features of one or more of the preceding claims,
wherein the outside diameter D of the annular, linear recesses (6) is formed where 4 mm ≤ D ≤ 7 mm.

5. Pneumatic vehicle tyre according to the features of one or more of the preceding claims,
wherein the width d of the linear recesses (6) is formed where 0.5 mm ≤ d ≤ 1.5 mm.

6. Pneumatic vehicle tyre according to the features of one or more of the preceding claims,
wherein the linear recesses (6) are formed with a depth t where 0.3 mm ≤ t ≤ 0.6 mm.

7. Pneumatic vehicle tyre according to the features of one or more of the preceding Claims 1 to 6,
wherein the annular, linear recesses (6) are formed with an opening width b of their opening gap (11) where b < (D/2) - in particular where 0.3 mm ≤ b ≤ 1.5 mm.

8. Pneumatic vehicle tyre according to the features of one or more of the preceding claims,
wherein a number of such surface elements (7) enclosed by linear recesses (6) are arranged one above the other in a row (8, 9) in a radial position in the tyre, and
wherein a number of such rows (8, 9) of surface elements (7) enclosed by linear recesses (6) arranged one above the other in a radial position in the tyre are arranged alongside one another in the circumferential direction U.

9. Pneumatic vehicle tyre according to the features of Claim 8,
wherein rows (8, 9) respectively arranged alongside one another in the circumferential direction U are formed offset from one another in the radial direction R, so that the linear recesses (6) of the one (8) of two rows (8, 9) that are adjacent in the circumferential direction U are in each case arranged in a radial position between two linear recesses (6) of the other (9) of the two adjacent rows (8, 9).

10. Pneumatic vehicle tyre according to the features of Claim 8 or 9,
wherein rows (8, 9) arranged one behind the another in the circumferential direction U of which the linear recesses (6) are in each case formed in the same radial position form an angle α with one another where 2° ≤ α ≤ 4° - in particular where α = 2.4°, wherein the angle α is in each case measured between the two radials of the tyre formed by the centre points of the annular recesses (6) of a row (8, 9).

11. Pneumatic vehicle tyre according to the features of one or more of the preceding claims,
wherein annular recesses (6) of the portion that are adjacent in the radial direction R are arranged in relation to one another with a spacing a₂, measured in the radial direction R of the tyre, where 2 mm ≤ a₂ ≤ 5 mm.

12. Pneumatic vehicle tyre according to the features of one or more of the preceding claims,
wherein annular recesses (6) of the portion that are adjacent in the circumferential direction U are arranged in relation to one another with a spacing a₁ where 2 mm ≤ a₁ ≤ 5 mm.

## Revendications

1. Pneumatique de véhicule avec une bande de roulement (2) profilée et avec deux parois latérales de pneumatique (3) comportant sur leur surface orientée vers l'extérieur dans le plan axial des structures superficielles, la surface d'au moins une paroi latérale (3) étant réalisée avec une section avec une accumulation tant de structures (6) en forme de ligne en forme d'anneau disposées de façon répartie côte à côte tant dans la direction radiale R que dans la direction périphérique U ;
la structure (6) en forme de ligne entourant respectivement au moins en partie de façon directement étroite un élément superficiel (7) et étant réalisée de façon approfondie par rapport aux éléments superficiels (7) entourés par elle et par rapport à la surface de la paroi latérale (3) entourant la structure (6) en forme de ligne sous la forme d'un renfoncement (6) en forme de ligne ;
**caractérisé en ce que** :
le renfoncement (6) en forme de ligne forme respectivement une forme annulaire ouverte avec une fente d'ouverture (11) et que l'élément superficiel (7) entouré par elle et la surface de la paroi latérale (3) entourant le renfoncement (6) en forme de ligne se transforment constamment les uns dans les autres au travers de la fente d'ouverture (11).

2. Pneumatique de véhicule selon les caractéristiques de la revendication 1, la fente d'ouverture (11) des renfoncements (6) en forme de ligne de la section étant respectivement orientée vers la même direction, dans le système de coordonnées cylindrique du pneumatique, avec un axe de pneumatique, la direction périphérique U et la direction radiale R.

3. Pneumatique de véhicule selon les caractéristiques de la revendication 1 ou 2, les structures (6) en forme de ligne étant positionnées de telle sorte que leur fente d'ouverture (11) soit respectivement orientée, dans la direction radiale R, vers l'intérieur par rapport à l'axe de pneumatique.

4. Pneumatique de véhicule selon les caractéristiques d'une ou plusieurs revendications précédentes, le diamètre extérieur D des renfoncements (6) en forme d'anneau, en forme de ligne, étant réalisé avec 4 mm ≤ D ≤ 7 mm.

5. Pneumatique de véhicule selon les caractéristiques d'une ou plusieurs revendications précédentes, la largeur d des renfoncements (6) en forme de ligne étant réalisée avec 0,5 mm ≤ d ≤ 1,5 mm.

6. Pneumatique de véhicule selon les caractéristiques d'une ou plusieurs revendications précédentes, les renfoncements (6) en forme de ligne avec une profondeur t étant réalisés avec 0,3 mm ≤ t ≤ 0,6 mm.

7. Pneumatique de véhicule selon les caractéristiques d'une ou plusieurs revendications précédentes 1 à 6, les renfoncements (6) en forme d'anneau, en forme de ligne avec une largeur d'ouverture b de leur fente d'ouverture (11) étant réalisés avec b < (D/2) - notamment avec 0,3 mm ≤ b ≤ 1,5 mm.

8. Pneumatique de véhicule selon les caractéristiques d'une ou plusieurs revendications précédentes ; plusieurs éléments superficiels (7) enveloppés par de tels renfoncements (6) en forme de ligne étant disposés en ligne (8, 9) les uns au-dessus des autres en position radiale dans le pneumatique ; et
plusieurs telles lignes (8, 9) d'éléments superficiels (7) enveloppés par des renfoncements (6) en forme de ligne disposés dans la position radiale dans le pneumatique sont disposées côte à côte dans la direction périphérique U.

9. Pneumatique de véhicule selon les caractéristiques de la revendication 8, des lignes (8, 9) respectivement disposées côte à côte dans la direction périphérique U étant réalisées dans la direction radiale R de façon décalée les unes par rapport aux autres, de sorte que les renfoncements (6) en forme de ligne de la première ligne (8) parmi deux lignes (8, 9) respectivement connexes dans la direction périphérique U soient disposées dans la position radiale entre deux renfoncements (6) en forme de ligne de l'autre ligne (9) des deux lignes (8, 9) connexes.

10. Pneumatique de véhicule selon les caractéristiques de la revendication 8 ou 9, les lignes (8, 9) disposées l'une derrière l'autre dans la direction périphérique U et dont les renfoncements (6) en forme de ligne sont respectivement réalisés dans la même position radiale incluent un angle α avec 2° ≤ α ≤ 4° - notamment avec α = 2,4°, l'angle α étant respectivement mesuré entre les deux radiales du pneumatique réalisées au travers des points centraux des renfoncements (6) en forme d'anneau d'une ligne (8, 9).

11. Pneumatique de véhicule selon les caractéristiques d'une ou plusieurs revendications précédentes, les renfoncements (6) en forme d'anneau connexes dans la direction radiale R de la section étant disposés à une distance a₂ les uns par rapport aux autres mesurée dans la direction radiale R du pneumatique avec 2 mm ≤ a₂ ≤ 5 mm.

12. Pneumatique de véhicule selon les caractéristiques d'une ou plusieurs revendications précédentes, les renfoncements (6) en forme d'anneau connexes dans la direction périphérique U de la section étant disposés à une distance a₁ les uns par rapport aux autres avec 2mm ≤ a₁ ≤ 5mm.
